# EUROPEAN PATENT APPLICATION

(11) **EP 2 662 817 A1**
(43) Date of publication of application: **13.11.2013**
(21) Application number: 13166739.6
(22) Date of filing: 07.05.2013
(51) Int. Cl.: G06Q 10/10

(54) **System for managing revisions of a document comprising a central repository, such central repository, mobile device, method, and computer program product therefor, and data carrier therewith**

(30) Priority: 08.05.2012 EP 12167173
(71) Applicant: Océ-Technologies B.V., 5914 CA Venlo (NL)
(72) Inventor: Eijlander, Albert R.M., 6512 EA Nijmegen (NL); van Erp, Bernardus C.L.M., 6515 JJ Nijmegen (NL); Herraets, Theodorus J.E.M., 5976 NJ Kronenberg (NL)
(74) Representative: Groen, Mark Jacobus

(57) **Abstract**

System for managing revisions of documents comprising a central repository and a mobile device comprising: an optical scanner for scanning an identifier on a document; communication means to communicate the scanned identifier to the repository, and to receive a response comprising: a designation whether the scanned identifier is the latest revision of the document, or a revision identifier designating the latest revision of the document; reproduction means to reproduce the response received from the communication means; the repository further comprising: communication means to receive an identifier, and to send a designator designating whether the identifier represents the latest revision or a revision identifier designating the latest revision of the document; revision retrieval means to retrieve the latest revision of the document represented by the identifier, and to determine the designator or the revision identifier.

## Description

The present invention relates to a system for managing revisions of a document comprising a central repository storing a plurality of documents, each document having a document revision.

The invention further relates to a central repository for such a system.

The present invention also relates to a mobile device for managing revisions of documents stored in a central repository.

Furthermore, the present invention relates to a method for managing revisions of a document.

The present invention also relates to a computer program product that, when executed on a processor, executes such a method.

The invention further relates to a data carrier comprising such a computer program product.

When documents progress through a revision cycle, commonly including many different revisions, it is always important to make sure one is working on or with the correct revision of the document. This applies both to the authors and editors of the document, as well as the users of the document that require the documents as input for their tasks. Especially if one is physically and communicationwise remote from the author/ editor of a document, a user of the document needs to be careful to ensure the latest version of the document is being used.

For example, on a construction site, one needs to make sure that the drawings used for construction are up-to-date, even if, and especially when, plans are adapted during construction.

The object of the present invention is to help users of documents to ensure up-to-date versions of documents are being used.

In this document the words version and revision are used interchangeably. They refer to subsequent editions of a single document during a revision process, wherein originally a first edition is created and subsequent editions are created by modifying the previous edition (regardless whether the modifications comprise additions, deletions, or alterations). All editions, versions, revisions of a document describe the same subject (except for the modifications), and a subsequent edition, version, revision is supposed to replace any previous edition, version, revision.

Furthermore, although the term revision number is used in this document it refers to any designation of the revision of a document. The designation is not necessarily a number. It might as well comprise letters, other characters, names, or combinations thereof. Anything that makes it possible to distinguish distinct revisions would suffice. Preferably, it is intuitive to a user that the designation is subject to some ordering allowing him to easily recognise what designation is considered to be later, or more up-to-date when confronted with two or more designations.

The object of the present invention is obtained by providing a system for managing revisions of a document comprising: a central repository storing a plurality of documents, each document having a document revision and the central repository storing for each document at least one revision; and a mobile device comprising: an optical scanner for scanning an optically readable identifier present on a document; communication means connected to the optical scanner and arranged to communicate the scanned identifier to the central repository, and further arranged to receive from the central repository a response, the response comprising at least one of: a designation whether the scanned identifier is the latest revision of the document stored in the central repository, and a revision identifier designating the latest revision of the document that is stored in the central repository; reproduction means connected to the communication means arranged to reproduce the response received from the communication means; wherein the central repository further comprises: communication means arranged to: receive from the mobile device a document identifier; send to the mobile device at least one of: a designator designating whether the received document identifier represents the latest revision of the document stored, and a revision identifier designating the latest revision of the document stored; revision retrieval means connected to the communication means and arranged to: receive from the communication means the received document identifier; retrieve the latest revision of the document represented by the received document identifier; determine at least one of: a designator designating whether the received document identifier represents the latest revision of the document stored, and a revision identifier designating the latest revision of the document stored; and send to the communication means at least one of the designator and the revision identifier. The documents stored in the central repository may for example be drawings, technical specifications, part lists, schedules, basically any document that needs to go through a revision cycle. The central repository typically stores a number of documents. Documents have a revision, usually expressed by a revision number, which is either a single number, or a composite number consisting of a major revision number and one or more subrevision numbers.

When a document is printed, an identifier is printed on the document, either because the identifier is part of the document contents, or because the identifier is added during the printing process, or a print pre-process process. This identifier uniquely identifies at least the document. In a preferable embodiment of the invention, the identifier also identifies the revision of the document. This identifier is scanned with a mobile device. The identifier may simply be printed as a string of characters, or in a preferable embodiment, the identifier is encoded in an easily and reliably scannable code, for example a bar code or QR-code. In the first case, an embodiment comprising a camera is used to scan the identifier. Optical Character Recognition (OCR) is used to convert the image of the identifier into an actual identifier. In the latter case, either a camera or a laser scanner is used to scan the bar code or QR-code.

The mobile device contacts the central repository and queries the central repository for the latest revision of the document. If the identifier sent by the mobile device to the central repository does not comprise the revision number, the central repository returns the latest revision number of the document. If the mobile device is also not aware of the actual revision number of the document of which the identifier was scanned, the mobile device reproduces the received latest revision number, and the user of the mobile device compares the received latest revision number to the actual revision number of the document he is using in order to determine whether he is using the latest revision of the document. In contrast, if the mobile device is aware of the revision of the document of which the identifier was scanned, it is able to draw a conclusion itself and for example either reproduce a message confirming the document of the scanned identifier is up-to-date, or reproduce a message that the document is outdated. In an alternative embodiment it is the central repository that determines whether the identifier corresponds to the latest revision of the document. In this case the identifier must identify both a specific document and a specific revision of the document. In another embodiment, the message informing the user the document is outdated also includes the revision number of the latest revision.

In a specific embodiment the identifier on the document comprises an address of the central repository. This allows for using more than a single repository. In a more specific embodiment, the identifier comprises or encodes a uniform resource identifier (URI).

In a preferred embodiment the mobile device communicates wirelessly with the central repository. This greatly facilitates for example users on construction sites.

In a preferred embodiment, the reproduction means comprise a display, and the user is visually informed of the latest revision number, or informed whether the document of which he scanned the identifier is up-to-date or outdated. Alternatively, the reproduction means comprise sound reproducing means, such as a speaker, or means for driving a headphone.

In a further embodiment according to the invention a system is provided, wherein the central repository further comprises difference determination means for determining a difference between the actual revision represented by the received identifier and the latest revision of the document represented by the received identifier and for generating a representation of the difference; and wherein the communication means of the central repository is further connected to the difference determination means and are arranged to receive from the difference determination means the representation of the difference and include in the response the representation of the difference; and wherein the communication means of the mobile device are arranged to receive the response from the central repository including the representation, and the reproduction means are arranged to reproduce the representation included in the response.

If the identifier sent by the mobile device to the central repository comprises the revision number and the central repository determines that the received identifier does not correspond to the latest revision of the document, the central repository determines the difference between the revision received and the latest revision and generates a difference document that shows these differences between the revisions. This representation of the differences, i.e. the difference document, is returned to the mobile device. The mobile device reproduces the representation of the differences to the user. This way the user may determine whether the differences affect his tasks or not. Especially in bigger constructions, it is quite possible that the differences are rather minor and only relate to a very small part of the document. This might allow the user to proceed with the revision of the document he already has (at least) for the time being.

The differences between the two revisions might comprise additions, deletions and/or alterations. When the differences are reproduced the differences might be specifically formatted in order to make it easy for the user to recognise the differences. For example, if the reproduction means comprise a display, additions might be marked in a contrasting colour. Deletions may be marked in another colour, or strike-through markup may be used.

Alternatively, the difference between the two revisions may be determined by the mobile device itself. However, this requires the two revisions being sent to the mobile device and requires the mobile device to have the processing power to determine this difference. At the time of writing of this application, this puts quite a burden on the communication means and the processor of the mobile device. Future communication means and future mobile device might be more suitable though.

The present invention further provides a system, wherein the representation comprises at least one of: an overview of the document with the areas that comprise a difference between the two revisions highlighted; and a detailed excerpt of an area comprising a difference between the two revisions with the difference highlighted. The overview allows the user to quickly identify whether the part of the document he is using is affected by the modifications that were introduced since the revision of the document he is using. If the part he is using is not affected, he may continue his task without obtaining the latest revision of the document. In one specific embodiment the document is a drawing, and the overview comprises a reduced size view of the drawing lacking detail wherein parts of the document that have changed have been highlighted, for example by means of a contrasting colour. In another specific embodiment the document is a text document, and the overview comprises reduced size views of the pages wherein the actual text is not readable anymore, but wherein the parts that have changed are highlighted, for example by means of a contrasting colour.

In contrast to the overview, the detailed excerpt informs the user exactly what has changed without the need to obtain the complete document (the latest revision thereof). Disadvantage is that the user might not recognise what part of the document the detailed excerpt refers to. In a further embodiment this may be alleviated to some extend by including a reference to the part that is changed, for example, in the case of a text document, the reference might comprise a page number and/or paragraph number and/or line number.

In a preferred further embodiment, the present invention provides a system, wherein the representation comprises both the overview and the detailed excerpt, and wherein the mobile device is arranged to allow a user to select in the overview a highlighted area when the overview is reproduced by the reproduction means, and wherein the reproduction means in response to the selection reproduce the detailed excerpt corresponding to the selected area. This embodiment does not require the user to obtain the complete version of the latest revision of the document, but does not have the drawback of the above embodiment, as the user is able to flip back and forth between the overview and the detailed excerpt.

The present invention advantageously provides a central repository as described in the above embodiments. It further advantageously provides a mobile device as described above.

In a further aspect according to the invention, a method executed by a mobile device for managing revisions of a document is provided, comprising the steps of: scanning with an optical scanner an identifier present on a document; communicating the identifier to a central document repository; receiving from the central repository a response comprising at least one of: a designation whether the scanned identifier is the latest revision of the document stored in the central repository, and a revision identifier designating the latest revision of the document that is stored in the central repository; and reproducing the response by means of reproduction means.

In order to find out whether he is using the latest revision of a document, the user scans the identifier on the document with the mobile device. The mobile device scans the identifier, for example just a string of characters, or preferably a bar code or QR-code. The mobile device accesses the central repository and sends the identifier to the repository. The mobile device receives a response from the central repository. If the identifier only identified a specific document, but not a specific revision of the document, the response comprises the latest revision of the document available in the central storage. The mobile device reproduces the response, preferably on a display. The user is now informed of the latest revision of the document and can compare it to the actual revision of the document he possesses. Based on the comparison the user determines whether he has the latest revision. More preferably, the identifier not only identifies a specific document, but also identifies a specific revision of this document. In that case, the central repository may compare the revisions on behalf of the user and return the result of the comparison. When the mobile device reproduces the response, the user is informed that either the document is up-to-date, or that it is outdated. In a more specific embodiment, in the latter case the response received by the mobile device comprises the revision number of the latest revision available and the mobile device also reproduces this revision number.

In a further aspect according to the invention, a method is provided, wherein the response further comprises a representation of a difference between the actual revision represented by the scanned identifier and the latest revision of the document represented by the scanned identifier as stored in the central repository, and wherein the method further comprises: reproducing the received representation of the difference. In this case, the identifier not only identifies a specific document, but it also identifies a specific revision of the document. In case the scanned identifier does not correspond to the latest revision of the document, the response received by the mobile device comprises a representation of a difference between the actual revision of the document of which the identifier was scanned and the latest revision of the document as available in the central repository. This representation is reproduced by the reproduction means of the mobile device, in order to inform the user what has actually changed.

In again a further aspect of the present invention a method is provided, wherein the representation comprises at least one of: an overview of the document with the areas that comprise a difference between the two revisions highlighted; and a detailed excerpt of an area comprising a difference between the two revisions with the difference highlighted. As already described above, the overview allows the user to quickly determine what part of the document is affected by the changes. In contrast, the detailed excerpt informs him what exactly changed, but at the expense of him being not aware what part of the document the detailed excerpt relates too.

In a preferred aspect according to the invention a method is provided, wherein the representation comprises both the overview and the detailed excerpt, and wherein the step of reproducing the response by means of reproduction means comprises: reproducing the overview of the document with the areas that comprise a difference highlighted; receiving from a user a selection representing a highlighted area, and in response to a selection by the user reproducing the detailed excerpt corresponding to the selected area. This aspect allows the user to inspect the details of changes without the risk of the user failing to notice what part of the document is affected by the change.

In another aspect of the invention, a method is provided, executed by a central repository storing a plurality of documents, each document having a document revision and the central repository storing for each document at least one revision, comprising the steps of: receiving from a mobile device a document identifier; retrieving the latest revision of the document represented by the received document identifier; determining at least one of: a designator designating whether the received document identifier represents the latest revision of the document stored, and a revision identifier designating the latest revision of the document stored; and sending to the mobile device at least one of: the designator, and the revision identifier.

In a further aspect of the present invention a method is provided, further comprising the steps of: determining a difference between the actual revision represented by the received identifier and the latest revision of the document represented by the received identifier; generating a representation of the difference; and including in the response the representation of the difference.

In another embodiment the present invention provides a computer program product that when executed on a processor, executes a method as described above.

In a further embodiment the present invention comprises a data carrier comprising such a computer program product.

In a preferred aspect of the invention a method is provided, wherein the representation comprises at least one of: an overview of the document with the areas that comprise a difference between the two revisions highlighted; and a detailed excerpt of an area comprising a difference between the two revisions with the difference highlighted.

Further embodiments and advantages will be discussed below, referring to the appended figures, wherein:
Figure 1 shows an application of the present invention;
Figure 2 shows a block diagram of an embodiment of the present invention;
Figure 3 shows a flow diagram of an embodiment of the present invention; and
Figure 4 shows a flow diagram of a further embodiment of the present invention.

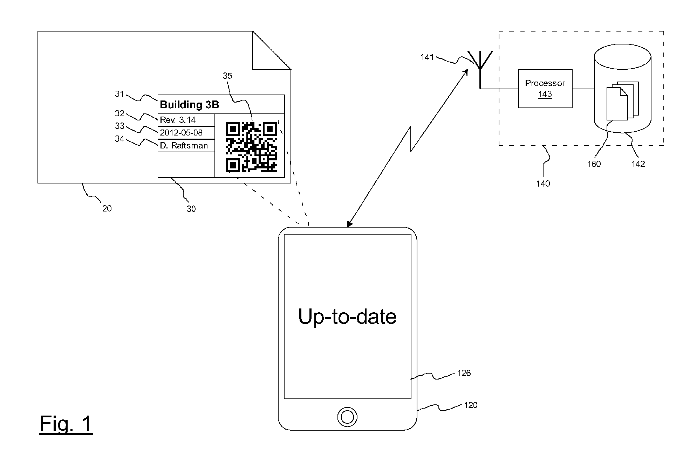

A drawing 20 (figure 1) is provided with a title block 30. The title block 30 provides information such as the title 31 of the drawing 20, a (human readable) revision number 32 of the drawing 20, the date 33 on which this revision of the drawing 20 was finalised, and the name 34 of the drafter of the drawing 20. The title block 30 further includes a QR-code 35. The QR-code 35 encodes a unique identifier for the drawing 20 including its revision number. The QR-code 35 may be scanned by a mobile device, such as a phone, a tablet 120 , a PDA or a laptop. When the QR-code 35 is scanned with the camera of a tablet 120, the tablet 120 decodes the QR-code 35 and sends the identifier wirelessly to a central repository 140. The tablet may use a mobile telephone network, or a Wifi-network or any other suitable network to communicate with the central repository 140. An antenna 141 picks up the wireless signal of the tablet 120. The identifier is processed in the processor 143 of the central repository 140. The central repository 140 includes a storage 142 storing drawings 160 and the revisions of each drawing 160. The processor 143 determines the drawing 20 identified by the identifier and queries the storage 142 to determine the latest revision. It compares the revision returned by the storage 142 to the revision identified by the received identifier. If the two revisions are the same, the processor 143 prepares a response for the tablet 120 to inform it that the received identifier corresponds to the latest revision available. The response is sent to the tablet 120. The tablet finally shows on its display 126 that the drawing is the most up-to-date drawing.

Alternatively, instead of determining that the received identifier corresponds to the latest revision available, the processor 143 determines that a later revision is available. In that case, it retrieves the revision corresponding to the received identifier and the latest revision. It compares the two revisions and generates a difference document. The difference document consists of an overview, which is a reduced size view of the drawing. Because of the reduced size, the overview does not provide enough detail to identify individual changes. However, areas that have been changed are highlighted by a red rectangle around the area that contains one or more changes. Furthermore, for each area that has changed between the two revisions, a detailed excerpt of the area is generated. This detailed excerpt provides all the detail of the changed area that the original drawing can provide. The excerpt is provided with markings representing the differences between the two revisions. Added graphical elements are marked in red, and deleted graphical elements are marked in faded blue. Added text is marked in red, and deleted text is marked in faded blue and shown in strike-through typeface. The highlighted areas in the overview are linked to the detailed excerpts, allowing the user to select a highlighted area and being presented with the corresponding detailed excerpt. This difference document is returned to the tablet 120. The tablet 120 initially shows the overview of the difference document on its display 126. When the user taps one of the highlighted areas, the tablet 120 responds by showing the detailed excerpt corresponding to the tapped highlighted area. By tapping a back button, the user may navigate back to the overview in order to select a further highlighted area. This way, the user is quickly informed of the changes between the revision he has in paper form and the latest revision of the document, without the need to either physically fetch the latest revision of the drawing or downloading the latest revision. Especially, when the number of changes is rather limited, the user might proceed with his tasks knowing his work is not affected by the changes.

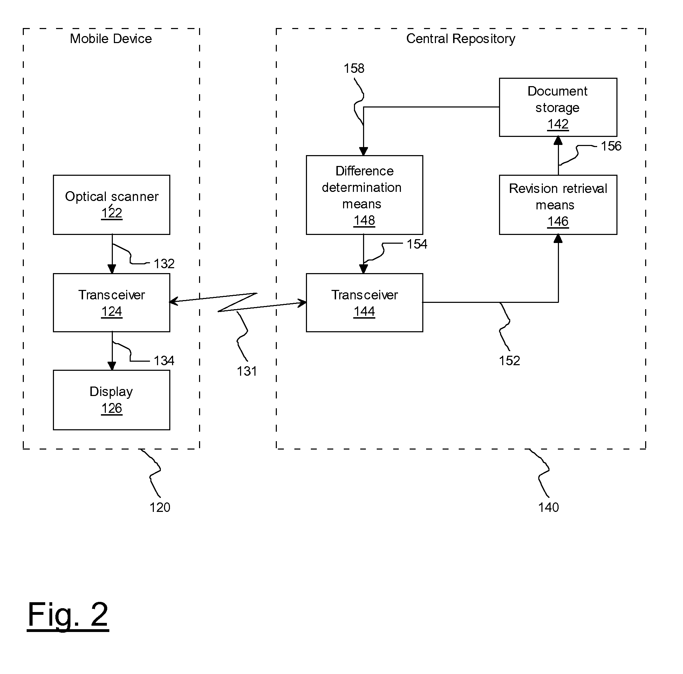

To be able to scan the QR-code 35, the tablet 120 is provided with an optical scanner, for example a camera 122 (figure 2). The camera 122 obtains an image of the QR-code 35. A processor (not shown) in the tablet decodes the QR-code 35 and sends 131 it through the transceiver 124 to the central repository 140. The transceiver 124 is for example a Wifi radio. The central repository 140 picks up the wireless signal by means of its own transceiver 144.

Usually, the transceiver 144 will physically be a separate device from the central repository 140, for example some Wifi router in a network, while the central repository 140 comprises a server with a wired network connection and connected through this wired network to the external Wifi router. However, for clarity's sake, the transceiver is depicted here as being part of the central repository 140. Therefore, "central repository" more or less refers to the central repository infrastructure, and not to a single physical machine.

The central repository 140 determines the document corresponding to the received identifier and determines 152 through the revision retrieval means 146 the latest revision. The revision retrieval means 146 has access 156 to the document storage 142 storing all documents and their revisions. If the received identifier corresponds to this latest revision too, the transceiver prepares a response that the received identifier corresponds to the latest revision and sends 131 this response back to the tablet 120. However, if the received identifier does not correspond to the latest revision, the difference determination means 148 retrieve 158 from the document storage 142 the revision corresponding to the received identifier and the latest revision of the document. Based on these two revisions, it generates a difference document as described above. This difference document is sent 154 to the mobile device 120 through the transceiver 144.

The mobile device 120 receives 131 the response through its transceiver 124. If the response comprised a message that the scanned document is up-to-date, a message to that extent is displayed on the display 126. If the revision of the scanned document is not the latest, the mobile device 120 renders the overview of the difference document and displays it on the display 126. By tapping highlighted areas in the overview, the user is taken to detailed excerpts showing the changes to the document.

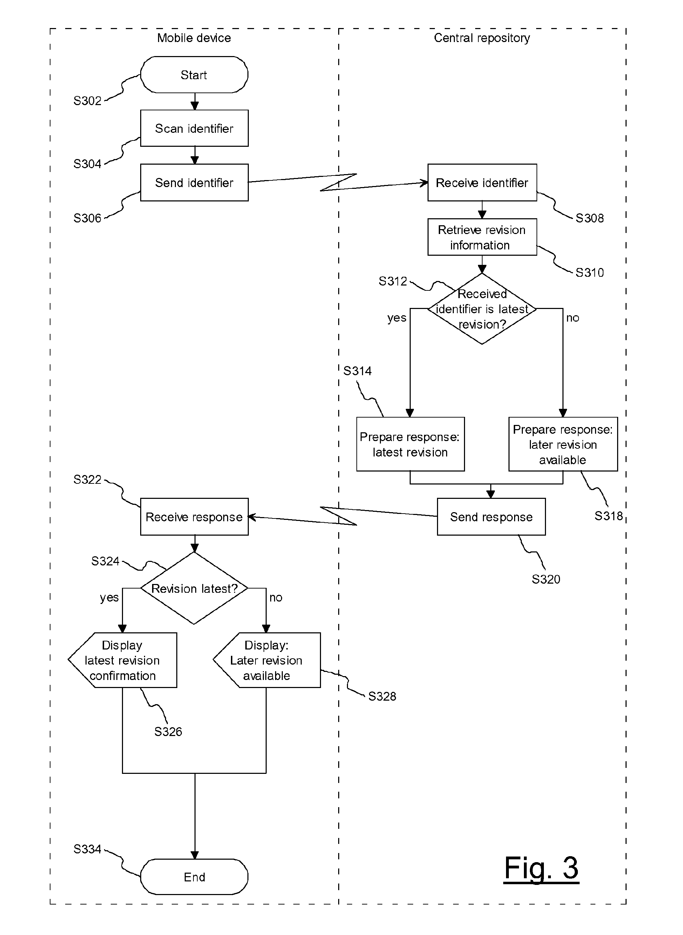

A simple embodiment of a method according to the present invention only reports whether the scanned document corresponds to the latest revision or not. Figure 3 shows the flow diagram for this embodiment. The method starts S302 with the mobile device 120 scanning S304 the QR-code 35 on the drawing. The identifier encoded in the QR-code 35 is sent S306 to the central repository 140. The central repository 140 receives S308 the identifier. The identifier allows the central repository 140 to identify the drawing. From the document storage 142 information on the latest revision is retrieved S310. This revision is compared S312 to the revision identified by the received identifier. If the revisions match, a response is prepared S314 to report that the received identifier corresponds to the latest revision available. Alternatively, if the two revisions do not match, a response is prepared S318 that the received identifier corresponds to an outdated revision. The central repository 140 concludes by sending S320 the response to the mobile device 120.

The mobile device 120 receives S322 the response. It evaluates S324 the response. If the response reports that the identifier corresponds to the latest revision available a message is displayed S326 on the display 126 that confirms the scanned document is up-to-date. Alternatively, if the response reports the identifier does not correspond to the latest revision, the mobile device 120 displays S328 on its display 126 a message that the scanned document is outdated. After displaying the message the method ends S334.

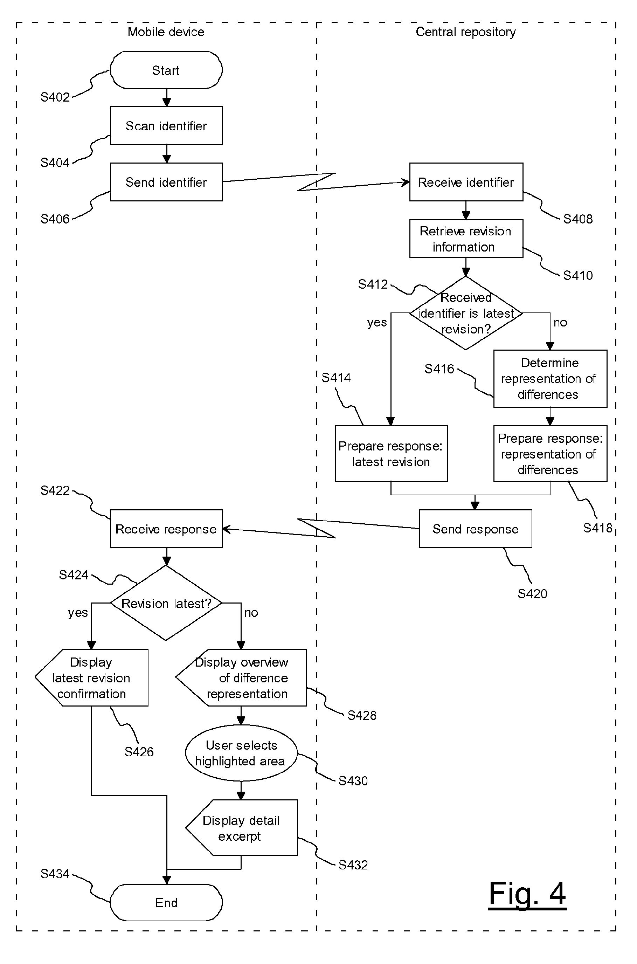

A flow diagram of a more preferred embodiment is shown in figure 4. This flow diagram corresponds to quite some extent with the flow diagram of figure 3. Reference numbers of corresponding steps are equal with the exception that the reference numbers in figure 3 are in the 300 range and reference numbers in figure 4 are in the 400 range. Below, only the differences will be described.

After the central repository 140 has retrieved S410 information on the latest revision and determined S412 that the received identifier does not correspond to the latest revision, a representation of the differences between the two revisions is generated S416. This representation comprises an overview and detailed excerpts as described above. A response is prepared S418 that contains the difference document. After the response is sent S420 by the central repository 140 and received S422 by the mobile device 120, the mobile device 120 determines S424 whether the response indicates whether the identifier corresponds to the latest revision. If not, the overview in the difference document is displayed S428 on the display 126 of the mobile device 120. The mobile device checks S430 if a user selects one of the highlighted areas of the overview. If the user does select a highlighted area, the mobile device 120 displays S432 on the display 126 the detailed excerpt corresponding to the selected highlighted area. By means of a back button, the user may navigate back to the overview in order to select a further highlighted area. This last step is not shown in the flow diagram though. For simplicity's sake, the method ends S434.

The embodiments described above and shown in the figures are only exemplary embodiments. They are only provided for illustrative purposes and should not be regarded as limiting. To the skilled person it is clear that these embodiments may be modified without departing from the present invention. For example, it is possible to combine the features of separate embodiments and obtain further embodiments of the present invention. The scope of protection sought is only limited by the following claims.

## Claims

1. System for managing revisions of a document comprising:
a central repository storing a plurality of documents, each document having a document revision and the central repository storing for each document at least one revision; and
a mobile device comprising:
- an optical scanner for scanning an optically readable identifier present on a document;
- communication means connected to the optical scanner and arranged to communicate the scanned identifier to the central repository, and further arranged to receive from the central repository a response, the response comprising at least one of:
a designation whether the scanned identifier is the latest revision of the document stored in the central repository, and
a revision identifier designating the latest revision of the document that is stored in the central repository;
- reproduction means connected to the communication means arranged to reproduce the response received from the communication means;
wherein the central repository further comprises:
- communication means arranged to:
receive from the mobile device a document identifier;
send to the mobile device at least one of:
a designator designating whether the received document identifier represents the latest revision of the document stored, and
a revision identifier designating the latest revision of the document stored;
- revision retrieval means connected to the communication means and arranged to:
receive from the communication means the received document identifier;
retrieve the latest revision of the document represented by the received document identifier;
determine at least one of:
a designator designating whether the received document identifier represents the latest revision of the document stored, and
a revision identifier designating the latest revision of the document stored; and
send to the communication means at least one of the designator and the revision identifier.

2. System according to claim 1, wherein
the central repository further comprises difference determination means for determining a difference between the actual revision represented by the received identifier and the latest revision of the document represented by the received identifier and for generating a representation of the difference ; and
wherein the communication means of the central repository is further connected to the difference determination means and are arranged to receive from the difference determination means the representation of the difference and include in the response the representation of the difference; and
wherein the communication means of the mobile device are arranged to receive the response from the central repository including the representation, and the reproduction means are arranged to reproduce the representation included in the response.

3. System according to claim 2, wherein the representation comprises at least one of:
an overview of the document with the areas that comprise a difference between the two revisions highlighted; and
a detailed excerpt of an area comprising a difference between the two revisions with the difference highlighted.

4. System according to claim 3, wherein the representation comprises both the overview and the detailed excerpt, and wherein the mobile device is arranged to allow a user to select in the overview a highlighted area when the overview is reproduced by the reproduction means, and wherein the reproduction means in response to the selection reproduce the detailed excerpt corresponding to the selected area.

5. The central repository according to any of claims 1-4.

6. The mobile device according to any of claims 1-4.

7. Method executed by a mobile device for managing revisions of a document comprising the steps of:
scanning with an optical scanner an identifier present on a document;
communicating the identifier to a central document repository;
receiving from the central repository a response comprising at least one of:
- a designation whether the scanned identifier is the latest revision of the document stored in the central repository, and
- a revision identifier designating the latest revision of the document that is stored in the central repository; and
reproducing the response by means of reproduction means.

8. Method according to claim 7, wherein the response further comprises a representation of a difference between the actual revision represented by the scanned identifier and the latest revision of the document represented by the scanned identifier as stored in the central repository, and wherein the method further comprises:
reproducing the received representation of the difference.

9. Method according to claim 8, wherein the representation comprises at least one of:
an overview of the document with the areas that comprise a difference between the two revisions highlighted; and
a detailed excerpt of an area comprising a difference between the two revisions with the difference highlighted.

10. Method according to claim 9, wherein the representation comprises both the overview and the detailed excerpt, and
wherein the step of reproducing the response by means of reproduction means comprises:
reproducing the overview of the document with the areas that comprise a difference highlighted;
receiving from a user a selection representing a highlighted area, and
in response to a selection by the user reproducing the detailed excerpt corresponding to the selected area.

11. Method executed by a central repository storing a plurality of documents, each document having a document revision and the central repository storing for each document at least one revision, comprising the steps of:
receiving from a mobile device a document identifier;
retrieving the latest revision of the document represented by the received document identifier;
determining at least one of:
- a designator designating whether the received document identifier represents the latest revision of the document stored, and
- a revision identifier designating the latest revision of the document stored; and
sending to the mobile device at least one of:
- the designator, and
- the revision identifier.

12. Method according to claim 11, further comprising the steps of:
determining a difference between the actual revision represented by the received identifier and the latest revision of the document represented by the received identifier;
generating a representation of the difference; and
including in the response the representation of the difference.

13. Method according to claim 12, wherein the representation comprises at least one of:
an overview of the document with the areas that comprise a difference between the two revisions highlighted; and
a detailed excerpt of an area comprising a difference between the two revisions with the difference highlighted.

14. Computer program product that when executed on a processor, executes a method according to any of claims 7-13.

15. Data carrier comprising a computer program product according to claim 14.
